# EUROPÄISCHE PATENTSCHRIFT

(11) **EP 3 322 641 B1**
(45) Veröffentlichungstag und Bekanntmachung des Hinweises auf die Patenterteilung: **04.01.2023**
(21) Anmeldenummer: 16729901.5
(22) Anmeldetag: 16.06.2016
(51) Int. Cl.: B64C 27/54, B64C 27/68, F16H 25/20

(54) **STEUERSTANGE ZUM VERSTELLEN VON EINEM ROTORBLATT EINES HUBSCHRAUBERS**
CONTROL BAR FOR ADJUSTING A ROTOR BLADE OF A HELICOPTER
BARRE DE CONTROLE POUR AJUSTER UNE PALE DE ROTOR D'HÉLICOPTÈRE

(30) Priorität: 15.07.2015 DE 102015213225
(43) Veröffentlichungstag der Anmeldung: 23.05.2018
(73) Patentinhaber: ZF Friedrichshafen AG, 88046 Friedrichshafen (DE)
(72) Erfinder: GÖTTE, Jürgen, 34246 Vellmar (DE); HAUSBERG, Andre, 34131 Kassel (DE)
(74) Vertreter: ZF Friedrichshafen AG
(86) Internationale Anmeldenummer: PCT/EP2016/063827
(87) Internationale Veröffentlichungsnummer: WO 2017/008984

(56) Entgegenhaltungen:
- DE-A1-102009 001 393
- DE-A1-102012 210 226

## Beschreibung

Die Erfindung betrifft eine Steuerstange zum Verstellen von einem Rotorblatt eines Hubschraubers, wobei die Steuerstange in Längsrichtung verstellbar ist, umfassend zumindest ein Anlagebereichselement, zumindest ein Anschlagelement, das ausgebildet ist die Verstellbarkeit der Steuerstange in Längsrichtung auf einen vorgebbaren Stellbereich in Zusammenwirken mit dem zumindest einen Anlagebereichselement zu begrenzen.

Aus der DE102009001393A1 ist eine Steuerstange für eine Steuerstangenanordnung zum Verstellen von Rotorblättern bekannt. Die dort beschriebene Steuerstangenanordnung zum Verstellen von Rotorblättern eines Hubschraubers hat eine Steuerstange mit zwei endseitig vorgesehenen Lageraugen und einen zwischen den Lageraugen angeordneten längenverstellbaren Stellbereich, wobei der Stellbereich auch als Hub oder Hubbereich bekannt ist. Die Steuerstange ist an ihrem rotorblattseitigen Ende über das eine Lagerauge mit dem Rotorblatt und an ihrem anderen, taumelscheibenseitigen Ende, über das andere Lagerauge mit einer Taumelscheibe verbunden. Der Abstand zwischen den beiden Lageraugen ist durch den längenverstellbaren Stellbereich mit einem in dem Stellbereich angeordneten Antrieb während des Flugs einstellbar. Zur Längenverstellung der Steuerstange sind bei der vorbekannten Steuerstangenanordnung als Antrieb im Stellbereich ein Elektromotor und ein Getriebe vorgesehen. Die einzelnen Steuerstangen können zudem zur Grund-/Voreinstellung in ihrer Längsrichtung verstellt werden. Die Grund-/Voreinstellung erfolgt in regelmäßigen Abständen und ausschließlich am Boden bei stehendem Rotor.

Aus der DE 10 2012 210 226 A1 ist eine Verstellvorrichtung für ein Fahrwerk eines Fahrzeugs bekannt. Die Verstellvorrichtung umfasst eine Spindel mit einem Gewinde und eine Spindelmutter, wobei die Spindelmutter auf das Gewinde schraubbar ist. Die Verstellvorrichtung umfasst ferner zwei Anschlagmittel welche jeweils mindestens eine Anschlagflache aufweisen. Die Anschlagflachen sind derart angeordnet, dass sie in einer Anschlagstellung die Axialbewegung der Spindel und der Spindelmutter relativ zueinander begrenzen können. Hierbei ist das erste Anschlagmittel an der Spindelmutter und das zweite Anschlagmittel an der Spindel angeordnet. Das zweite Anschlagmittel umfasst ein senkrecht zur Spindelachse orientiertes ring- oder hülsenartiges Element mit einer Nase und ein Federelement. Das Federelement ist zwischen dem hülsenartigen Element und einem Hohlspannstift angeordnet, der ein Widerlager bildet. Die Nase bzw. das ganze hülsenartige Element kann durch die Anordnung des Federelements axial ausweichen, was insbesondere bei einem Losdrehen der Spindelmutter von Vorteil ist, da so kein Verkanten auftritt.

Die dort beschriebene Steuerstange ermöglicht es, ein Rotorblatt eines Hubschraubers einzeln im Flug zu justieren. Mit diesem als In-Flight-Tuning bezeichneten Verfahren lassen sich Vibrationen, die durch eine Ungleichheit der Blätter entstehen, kontinuierlich in Abhängigkeit eines Flugzustandes reduzieren. Nachteilig an dieser Anordnung ist, dass die dort beschriebenen Anschläge zur Hubbegrenzung oder Stellbereichsfestlegung durch äußere Kräfte und die Kräfte aus dem Spindeltrieb stark belastet werden können, wenn die Spindelmutter am jeweiligen Anschlag anliegt oder gegenfährt.

Der Erfindung liegt die Aufgabe zugrunde, eine Steuerstange vorzuschlagen, bei der eine Verstellung der Steuerstangenlange während des Fluges und die Reduzierung der auf den bzw. die Anschläge angreifenden Kräfte sicher möglich sind. Erfindungsgemäß wird dies dadurch gelöst, dass das zumindest eine Anschlagelement in Umfanqsrichtunq der Steuerstange zur Veränderunq des vorgebbaren Stellbereiches versetzbar ist, derart, dass ein qrößerer oder ein kleinerer Schwenkbereich verwirklicht werden kann.

Im Sinne dieser Erfindung ist unter einem Anschlagelement ein körperliches Element zu verstehen, das eingerichtet ist, eine Verdrehung des Anlagebereichselements um eine Längsachse Steuerstange zu begrenzen. Dazu kann das Anschlagelement hinsichtlich des verdrehbaren Anlagebereichselements insbesondere drehfest anordenbar sein und ausgebildet sein, Kräfte und/oder Drehmomente des drehenden oder rotierenden Anlagebereichselements aufzunehmen und beispielsweise in benachbarte Bauteile abzuleiten oder abzuführen.

Im Sinne dieser Erfindung ist unter einem Anlagebereichselement ein körperliches Element zu verstehen, dass eingerichtet ist, an dem zumindest einen Anschlagelement zum Anliegen zu kommen. Hierzu weist es insbesondere einen Bereich auf, der sich zumindest teilweise mit dem Anschlagelement in Umfangsrichtung radial überdeckt und ausgebildet ist, durch die Verdrehung verursachten Kräfte und/oder Drehmomente in Umfangsrichtung in das Anschlagelement einzuleiten.

Im Sinne dieser Erfindung bedeutet der Begriff "Zusammenwirken" insbesondere, dass das Anlagebereichselement mit dem zumindest einen Anschlagelement in Kontakt bringbar ist, um die Verstellung der Steuerstange zu begrenzen.

Erfindungsgemäß wird es somit möglich, den Stellbereich je nach Anforderung zu verkleinern oder zu vergrößern. So ist es denkbar, einen von beispielsweisen zwei Anschlagelementen, die einen Schwenkbereich von beispielsweise 210° zulassen in Umfangsrichtung derart zu versetzen, dass ein größerer Schwenkbereich, z. B. 300° oder ein kleinerer Schwenkbereich, z. B. 180° verwirklicht werden kann.

Weiter bevorzugt ist es, dass die Steuerstange ein koaxial zu ihr und drehbar um Ihre Längsachse angeordnetes erstes Trägerelement mit zumindest einem sich in Längsrichtung der Steuerstange erstreckenden und in Umfangsrichtung unterbrochenen ersten Vorsprung aufweist, wobei dieser Vorsprung das Anlagebereichselement bildet, wobei ein erster Anlagebereich an einem ersten Ende und ein zweiter Anlagebereich an einem dem ersten Ende im Wesentlichen gegenüberliegenden zweiten Ende des ersten Vorsprungs angeordnet sind. Das als Vorsprung, der auch als Nocken oder Schulter bekannt ist, ausgebildete Anlagebereichselement ist konstruktiv einfach herzustellen und baut besonders kompakt. Vorzugsweise ist das zumindest eine Anschlagelement ein Gewindebolzen. Der zumindest eine Gewindebolzen kann z. B. in eine von mehreren über den Umfang der Steuerstange angeordnete Ausnehmungen, insbesondere Bohrungen, eingeschraubt sein. Die Bohrungen können dabei insbesondere in einem Steuerstangengehäuse angeordnet sein.

Darüber hinaus ist es bevorzugt, dass das zumindest eine Anschlagelement an zumindest einem koaxial zur Steuerstange angeordneten zweiten Trägerelement angeordnet ist, wobei das Anschlagelement mittels eines sich in Längsrichtung der Steuerstange erstreckenden zweiten Vorsprungs gebildet wird, wobei das zumindest zweite Trägerelement mit einem Fixierungsmittel hinsichtlich des zumindest einen Anschlagelements fixierbar ist. Sollte es bauraumbedingt nicht möglich sein, über den Umfang der Steuerstange den zumindest einen Anschlag zu ersetzen, weil beispielsweise Peripheriegeräte angeordnet sind, so lässt sich die Stellbereichsveränderung in vorteilhafter Weise mit dem zweiten Trägerelement, das auch als Anschlagring bezeichnet wird, verwirklichen. Hierbei übernimmt der zweite Vorsprung ebenfalls als Nocken oder Schulter oder dergleichen bekannt, die Funktion des Anschlagelements. Der Anschlagring ist vorzugsweise um die Längsachse drehbar gelagert und kann über den Umfang verteilt mehrere Ausnehmungen aufweisen. Zur Fixierung oder Sicherung des Anschlagrings wird das Fixiermittel, beispielsweise ein Sicherungsbolzen, durch eine Ausnehmung im Steuerstangengehäuse in eine der Ausnehmungen des Anschlagrings eingeführt, so dass der Anschlagring über den Sicherungsbolzen mit dem Steuerstangengehäuse drehfest gekoppelt ist.

Der durch den Anschlagring vorgegebene Stellbereich kann dadurch verändert werden, dass der Sicherungsbolzen gelöst oder entfernt wird, beispielsweise dadurch, dass er in radialer Richtung herauszogen oder herausgeschraubt wird, und der Anschlagring in eine gewünschte Richtung gedreht wird, und zwar so lange, bis eine gewünschte Ausnehmung des Anschlagrings in Deckung mit der korrespondierenden Ausnehmung des Steuerstangengehäuses ist und der Sicherungsbolzen wieder eingeführt werden kann. Es ist ausreichend an dem Steuerstangengehäuse nur eine Gehäusebohrung zur Anschlagringsicherung vorzusehen. Es ist aber auch denkbar mehrere Gehäusebohrungen anzuordnen und auch mehrere Fixiermittel zu verwenden.

Weiterhin ist es bevorzugt, dass die Steuerstange ein drittes Trägerelement mit einem um die Längsachse der Steuerstange verdrehbaren zweiten Anschlagelement umfasst, wobei das dritte Trägerelement koaxial zum zweiten Trägerelement angeordnet ist und das zweite Anlagebereichselement ausgebildet ist, mit dem zumindest einen Anschlag zusammenzuwirken, wobei das zweite Trägerelement und das dritte Trägerelement mit einem Fixierungsmittel hinsichtlich des um die Längsachse verdrehbaren Anlagebereichselements fixierbar sind. Das dritte Trägerelement, insbesondere ein Anschlagring, mit einem beispielsweise als Nocken oder Schulter ausgebildeten zweiten Anschlagelement, erhöht die Einstellmöglichkeiten des Stellbereichs bei der Verwendung von Anschlagringen in vergleichbarer Weise wie bei der Verwendung von zwei Gewindebolzen oder zwei gewindebolzenähnlichen Anschlagelementen. Auch hier ist es z. B. denkbar, einen von zwei Anschlagringen, die einen Schwenkbereich des Anlagebereichselements von beispielsweise 210° zulassen, in Umfangsrichtung derart zu verdrehen, dass ein größerer Schwenkbereich, z. B. 300° oder ein kleinerer Schwenkbereich, z. B. 180°, verwirklicht werden kann. Jeder dieser Anschlagringe kann jeweils von zumindest einem Fixiermittel fixiert werden. Es ist aber auch denkbar, ein für beide Anschlagringe gemeinsames Fixiermittel zu verwenden.

Besonders bevorzugt ist es, dass die Steuerstange ein drittes Trägerelement mit einem um die Längsachse der Steuerstange verdrehbaren zweiten Anschlagelement umfasst, wobei das dritte Trägerelement koaxial zum zweiten Trägerelement angeordnet ist, wobei das Anlagebereichselement radial zum ersten Anschlagelement beabstandet ist. Durch die radiale Beabstandung des Anlagebereichselements zu einem Anschlagelement ist eine Verdrehung der Spindel über 360° hinaus möglich. Durch diese Ausführungsform eine maximale Umdrehung der Spindel von knapp weniger als zwei volle Umdrehungen, also 720°, möglich.

Darüber hinaus ist es bevorzugt, dass die Steuerstange in Längsrichtung elektrisch mittels eines Aktors verstellbar ist.

Besonders bevorzugt ist es, wenn der Aktor zur Verstellung der Steuerstange einen Spindeltrieb oder dergleichen umfasst, wobei eine Spindel des Spindeltriebs über eine Zahnradstufe von einem über einen Elektromotor angetriebenen Planetengetriebe antreibbar ist, und wobei die Spindel zur Verstellung der Steuerstange eine Spindelmutter axial bewegt und wobei die Spindel das Antriebselement ist.

Vorzugsweise ist der Spindeltrieb so ausgelegt, dass dieser den gesamten erforderlichen Stellbereich der Steuerstange abdeckt. Es sind jedoch auch andere Antriebe einsetzbar.

Weiterhin ist es bevorzugt, wenn das zumindest eine Anlagebereichselement drehfest mit einem Zahnrad der Zahnradstufe verbunden ist, wobei das Zahnrad mit der Spindel des Spindeltriebs verbunden ist. Es ist aber auch denkbar, das Zahnrad und die Spindel integral auszubilden. Durch die drehfeste Kopplung des Anlagebereichselements mit der Zahnradstufe ist eine direkte Kraft- und/oder Drehmomentübertragung auf das zumindest eine Anschlagelement möglich.

Besonders ist es bevorzugt, wenn das zumindest eine Anlagebereichselement integral, d. h. einstückig, mit einem Zahnrad der Zahnradstufe ausgebildet ist, wobei das Zahnrad mit der Spindel des Spindeltriebs verbunden ist. Auch können alle drei Komponenten integral ausgebildet sein. Ebenfalls ist es bevorzugt, dass der Aktor in Abhängigkeit von Sollvorgaben und von Istpositionen sowie von Sensorsignalen ansteuerbar ist, d. h. geregelt und/oder gesteuert werden kann. Eine Steuer- und/oder Regelungseinrichtung kann anhand einer Ist-Position und Sensoren Soll-Vorgaben ermitteln. Ein Betriebszustand der Anlage kann durch eine Anzeige dargestellt werden.

Weiterhin ist es bevorzugt, wenn das Anschlagelement von einer ersten Position in eine zweite Position überführbar ist, wobei das Anschlagelement in der ersten Position die Verstellbarkeit der Steuerstange begrenzt und in der zweiten Position die Verstellbarkeit der Steuerstange über den vorgebbaren Stellbereich hinaus zulässt. Z.B. lassen sich die als Gewindebolzen ausgeführten Anschlagelemente von einer ersten in eine zweite Position überführen und umgekehrt. In der ersten Position ist der gewindebolzen eingeführt, insbesondere eingeschraubt. In der zweiten Position, in welche der Gewindebolzen mittels Herausschrauben überführt werden kann, gibt der Gewindebolzen die Verdrehung über den Hubbereich hinaus frei, weil er in der Position nicht mit dem Anlagebereichselement zur Begrenzung des Hubbereichs zusammenwirken kann, d.h. die Verstellung der Steuerstange begrenzen kann. So kann eine Grund-/Voreinstellung der Steuerstange vorgenommen werden, welche am Boden bei stehendem Rotor durchgeführt werden kann.

Ebenfalls bevorzugt ist es, wenn das Anschlagelement von einem ersten Zustand in einen zweiten Zustand überführbar ist, wobei das Anschlagelement in dem ersten Zustand die Verstellbarkeit der Steuerstange begrenzt und in dem zweiten Zustand die Verstellbarkeit der Steuerstange über den vorgebbaren Stellbereich hinaus zulässt. Z.B. lassen sich die als Anschlagringe ausgeführten Anschlagelemente von einem ersten in einen zweiten Zustand überführen und umgekehrt. In dem ersten Zustand ist der Anschlagring mittels eines beispielsweise als Sicherungsbolzen ausgeführten Fixiermittels hinsichtlich des Anlagebereichselements fixiert, d.h. drehfest. In dem zweiten Zustand, in welchen der Anschlagring mittels Lösen oder Herausnehmen des Sicherungsbolzens überführt werden kann, gibt der Anschlagring die Verdrehung über den Hubbereich hinaus frei, weil er in diesem Zustand nicht mit dem Anlagebereichselement zur Begrenzung des Hubbereichs zusammenwirken kann, d.h. die Verstellung der Steuerstange begrenzen kann. So kann eine Grund-/Voreinstellung der Steuerstange vorgenommen werden, welche am Boden bei stehendem Rotor durchgeführt werden kann.

Nachfolgend wird die vorliegende Erfindung anhand von Zeichnungen weiter erläutert.

Es zeigen:
- Figur 1: eine geschnittene, dreidimensionale Ansicht einer erfindungsgemäßen Steuerstange;
- Figur 2: eine dreidimensionale Ansicht einer ersten bevorzugten Ausführungsform;
- Figur 3: eine dreidimensionale Ansicht einer zweiten bevorzugten Ausführungsform;
- Figur 4: die bevorzugte Ausführungsform der Fig. 3 in einem Längsschnitt;
- Figur 5: eine dreidimensionale Ansicht einer dritten bevorzugten Ausführungsform;
- Figur 6: eine vierte bevorzugte Ausführungsform in einem Querschnitt; und
- Figur 7: eine beispielhafte Vorrichtung zur Anschlagelementverstellung.

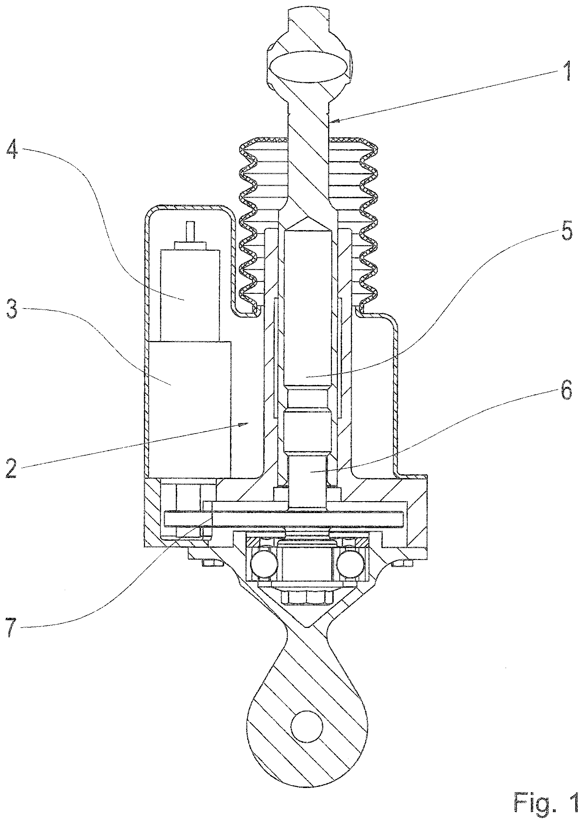

Eine erfindungsgemäße Steuerstange zum Verstellen von einem Rotorblatt eines Hubschraubers weist in an sich bekannter Weise an ihrem einen Ende eine rotorblattseitige Lageraufnahme und an ihrem anderen Ende eine motorseitige Lageraufnahme auf. Die Steuerstange 1 ist in Längsrichtung innerhalb eines vorgegebenen Stellbereichs verstellbar ausgeführt. Zur Steuerstangenverstellung weist die Steuerstange 1 zumindest einen Aktor 2 auf, welcher einen Spindeltrieb umfasst, der über ein Planetengetriebe 3 von einem Elektromotor 4 angetrieben wird. Der Spindeltrieb umfasst eine mit der Steuerstange 1 verbundene Spindelmutter 5, die durch eine Spindel 6 axial bewegt wird. Der Antrieb der Spindel 6 erfolgt über eine Zahnrad- bzw. Stirnradstufe 7, welche über das Planetengetriebe 3 von dem Elektromotor 4 angetrieben wird. Eine detaillierte Ansicht der Steuerstangenverstellung ist insbesondere in Fig. 1 dargestellt.

Erfindungsgemäß ist vorgesehen, dass der von zumindest einem Anschlagelement vorgegebene Stellbereich veränderbar ist und dass eine Wirkbeziehung zwischen dem den Dreh- oder Schwenkbereich der Spindel 6 begrenzenden Anschlagelement und der sich drehenden Spindel 6 in Umfangsrichtung erfolgt.

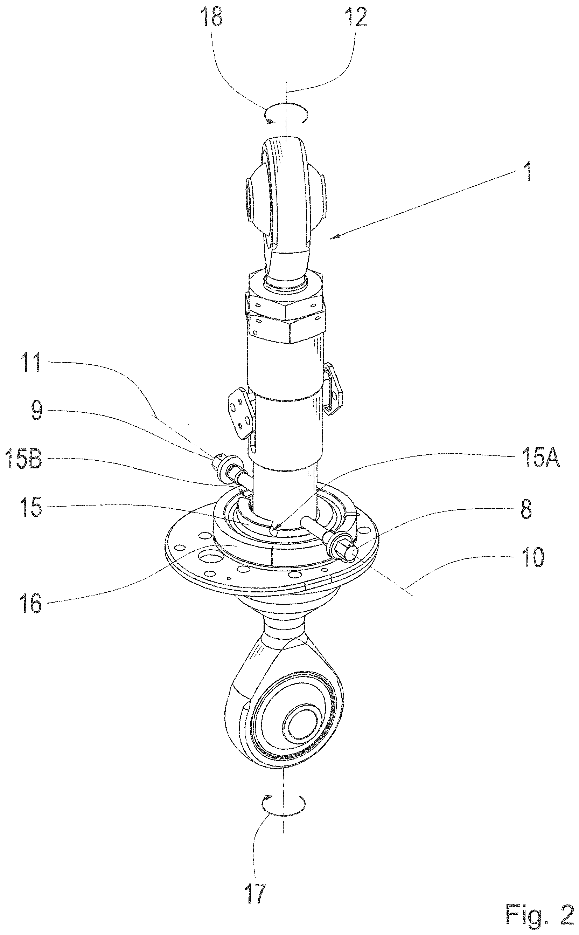

Wie dies erreicht wird, zeigen die Figuren 2 bis 7.

In Fig. 2 ist eine erste bevorzugte Ausführungsform dargestellt. Der Dreh- oder Schwenkbereich der nicht dargestellten Spindel 6 wird durch zwei als Gewindebolzen ausgeführte Anschlagelemente 8, 9 begrenzt. Jeweilige Längsachsen 10, 11 der Gewindebolzen 8, 9 schneiden eine Längsachse 12 der Steuerstange 1 jeweils lotrecht. Die zwei Gewindebolzen 8, 9 sind bezüglich der Längsachse 12 der Steuerstange 1 gegenüberliegend angeordnet, so dass die zwei Längsachsen 10,11 eine gemeinsame Längsachse bilden. In einem nicht dargestellten Steuerstangengehäuse 13 sind über den Umfang verteilt mehrere Gehäusebohrungen 14 vorgesehen, die die Gewindebolzen 8, 9 aufnehmen können. Die Gewindebolzen 8, 9 kommen in eingeführtem Zustand nicht mit der Spindel 6 in Kontakt. Die Steuerstange 1 weist weiterhin ein als Nocken oder Schulter ausgeführtes Anlagebereichselement 15 auf, das mit einem als Zahnrad 16 der Zahnradstufe 7 ausgebildeten ersten Trägerelement verbunden ist. Das Zahnrad 16 wiederum ist drehfest mit der Spindel 6 verbunden. Es kann aber auch integral mit der Spindel 6 ausgebildet sein. Wird die Spindel 6 zur Längsverstellung gegen den Uhrzeigersinn 18 gedreht, so kommt die Schulter 15 mit einem ersten Anlagebereich 15A an dem ersten Gewindebolzen 8 zum Anliegen. In umgekehrter Drehrichtung 17 kommt die Schulter 15 mit einem zweiten Anlagebereich 15B an dem zweiten Gewindebolzen 9 zum Anliegen. Die Schulter 15 ist integral, also einstückig, mit dem Zahnrad 16 der Zahnradstufe 7 ausgebildet. Die Anlagenbereiche 15A, 15B sind nach innen gewölbt, also konkav ausgebildet, damit eine größtmögliche Fläche der Anlagenbereiche 15A, 15B die Gewindebolzen 8, 9 zumindest teilweise umschließen kann. Der in der Fig. 2 dargestellte Drehbereich der Spindel 6 beträgt unter Berücksichtigung der Ausdehnung der Schulter 15 und der Gewindebolzen 8, 9 in Umfangsrichtung ca. 150°. Zum Verstellen des Verstellbereichs kann einer der Gewindebolzen 8 oder 9 oder beide Gewindebolzen 8, 9 aus der jeweiligen Gehäusebohrung 14 gelöst und in eine andere Gehäusebohrung 14 eingeführt werden. So ist, wenn man einen der Gewindebolzen 8, 9 entfernen würde, der Verstellbereich auf einen Drehbereich der Spindel 6 zwischen ca. 15° und ca. 345° verstellbar. Dabei ist dem Fachmann klar, dass die Verstellung nicht stufenlos erfolgt, sondern insbesondere in Abhängigkeit der Anzahl und in Abhängigkeit der Durchmesser der Gehäusebohrungen 14 erfolgt.

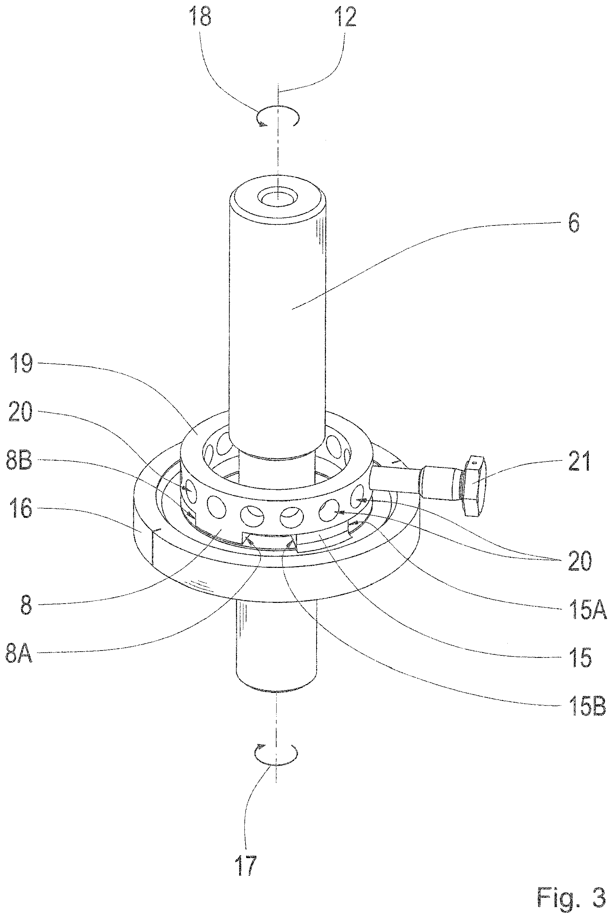

Fig. 3 zeigt eine weitere bevorzugte Ausführungsform. Hierbei ist ein als Nocken oder Schulter ausgebildetes sich in Längsrichtung erstreckendes erstes Anschlagelement 8 vorgesehen, das integral an einem als Anschlagring ausgebildeten zweiten Trägerelement 19 angeordnet ist und zwei Anschlagbereiche 8A, 8B aufweist. Der Anschlagring 19 ist koaxial zur Spindel 6 drehbar angeordnet und wird von einem nicht dargestellten Führungselement, das innerhalb des Steuerstangengehäuses 13 angeordnet ist, geführt. Zur Fixierung des Anschlagrings 19 wird ein als Sicherungsbolzen ausgebildetes Fixiermittel 21 in eine im nicht dargestellten Gehäuse 13 angeordnete Bohrung 14 und in eine von mehreren über den Umfang des Anschlagrings 19 angeordnete Bohrungen 20 eingeführt. Wird die Spindel 6 zur Längsverstellung gegen den Uhrzeigersinn 18 gedreht, so kommt die Schulter 15 mit ihrem Anlagebereich 15A an dem Nocken 8 zum Anliegen. In umgekehrter Drehrichtung 17 kommt die Schulter 15 mit ihrem Anlagebereich 15B an dem Nocken 8 zum Anliegen. Abzüglich einer jeweiligen Ausdehnung der Schultern 8, 15 in Umfangsrichtung ist gemäß Fig. 3 gegen den Uhrzeigersinn 18 eine ca. 335°-Drehung und mit dem Uhrzeigersinn 17 eine ca. 5°-Drehung der Spindel 6 möglich. Der Winkelbereich wird also durch die Ausdehnung der jeweiligen Schultern 8, 15 in Umfangsrichtung bestimmt. Zum Verstellen des Verstellbereichs wird der Sicherungsbolzen 21 aus der Bohrung 14 und 20 herausgenommen. Jetzt lässt sich der Anschlagring 19 mit der Schulter 8 um die Achse 12 drehen und der Stellbereich neu einstellen. Zum Fixieren des Anschlagrings 19 wird eine gewünschte Bohrung 20 mit der Gehäusebohrung 14 in Deckung gebracht und der Sicherungsbolzen 21 eingeführt.

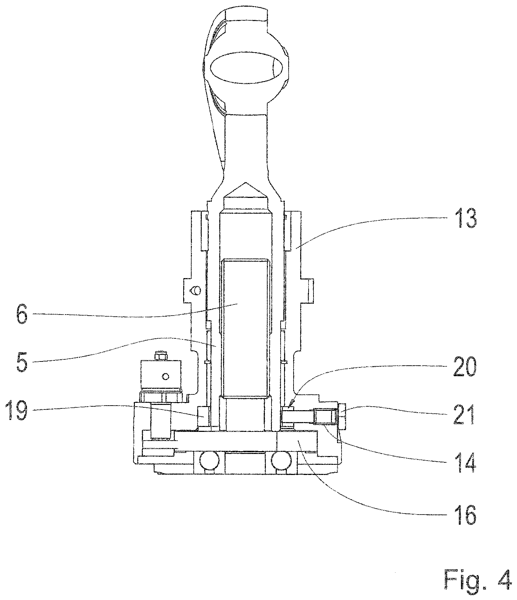

Fig. 4 zeigt die bevorzugte Ausführungsform der Fig. 3 in einer weiteren Ansicht. Zu erkennen ist, dass der Sicherungsbolzen 21 durch die Gehäusebohrung 14 in eine Bohrung 20 eingeführt ist. Damit ist der Dreh- oder Schwenkbereich der Spindel 6 auf einen Winkelbereich von ca. 330° begrenzt. Wie weiterhin zu erkennen ist, kommt der Sicherungsbolzen 21 weder mit der Spindelmutter 5 noch mit der Spindel 6 in Kontakt.

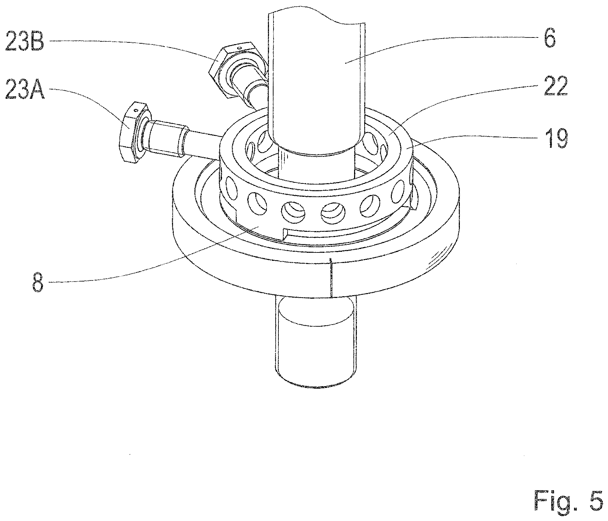

Fig. 5 zeigt eine weitere bevorzugte Ausführungsform. Im Unterschied zu Fig. 3 und Fig. 4 ist zusätzlich zum ersten Anschlagelement 8 ein nicht dargestelltes sich in Längsrichtung erstreckendes zweites Anschlagelement 9 vorgesehen, das integral an einem als Anschlagring ausgebildeten dritten Trägerelement 22 angeordnet ist, wobei der Anschlagring 22 koaxial zur Spindel 6 und radial zwischen der Spindel 6 und dem Anschlagring 19 drehbar angeordnet ist. Die Schultern 8 und 9 definieren einen einstellbaren Winkelbereich, indem die nicht dargestellte Schulter 15 zur Längsverstellung der Steuerstange 1 verdreht werden kann. Mittels des zweiten Anschlagrings 22 kann ein anderer Verstellbereich oder Hub eingestellt werden. Im Vergleich zu Fig. 3 kann insbesondere ein kleinerer Hub eingestellt werden. Der Hubbereich der in Fig. 5 dargestellten Steuerstange 1 beträgt ca. 200°. Die Anschlagringe 19 und 22 sind jeweils durch einen Sicherungsbolzen 23A bzw. 23B gegen Verdrehen gesichert. Es ist aber auch denkbar, beide Anschlagringe mit einem einzigen Sicherungsbolzen zu sichern.

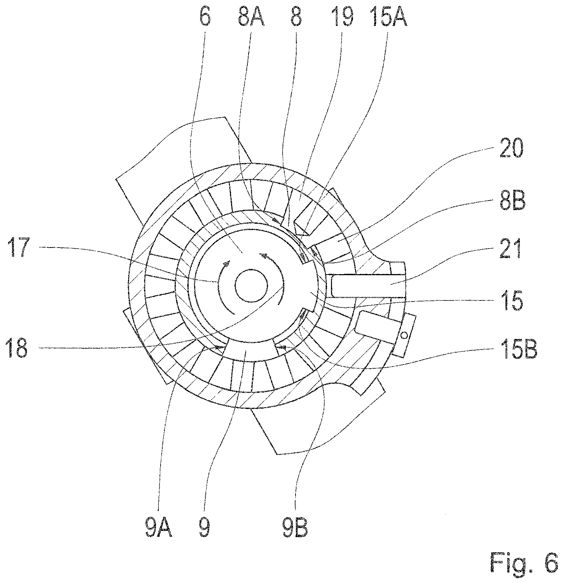

Fig. 6 zeigt eine weitere bevorzugte Ausführungsform. Der Anschlag 19 mit seiner Schulter 8 ist mittels des Sicherungsbolzens 21 gegen Verdrehen gesichert. Der Anschlagring 22 mit seiner Schulter 9 ist hingegen nicht gegen Verdrehung gesichert. Die Schulter 15 der Spindel 6 und die Schulter 8 des Anschlagrings 19 weisen keinen gemeinsamen Überdeckungsbereich in radialer Richtung auf, d. h. die Schulter 15 ist radial beabstandet zur Schulter 8, so dass eine Erweiterung des Stellbereichs oder des Hubs über eine Spindeldrehung hinaus möglich ist. Wird die Schulter 15 zur Längsverstellung der Steuerstange 1 in eine von beiden Drehrichtungen 17, 18 gedreht, so nimmt die Schulter 15 mit ihrem ersten oder zweiten Anlagebereich 15A bzw. 15B die Schulter 9 des nicht dargestellten und nicht fixierten Anschlagrings 22 in Umfangsrichtung solange mit, bis ein erster Anschlagbereich 8A oder ein zweiter Anschlagbereich 8B der Schulter 8 erreicht ist und die Schulter 15 die Schulter 9 gegen die fixierte Schulter 8 drückt. Der Vorteil, der in Fig. 6 dargestellten Ausführungsform, liegt insbesondere darin, dass die Spindel 6 zur Verstellung der Steuerstangenlängsrichtung über eine Spindeldrehung hinaus verdrehbar ist. Der Hubbereich, der in Fig. 6 dargestellten Steuerstange 1 beträgt ca. 630°.

Wird in der Fig. 6 die Spindel 6 mit der Schulter 15 beispielsweise im Uhrzeigersinn 17 gedreht, dreht die Schulter 15 bis sie mit ihrem Anlagebereich 15B an einem Anschlagbereich 9B der Schulter 9 anliegt. Die Schulter 15 nimmt die nicht fixierte Schulter 9 in Drehrichtung mit, bis ein Anschlagbereich 9A der Schulter 9 am Anschlagbereich 8A der fixierten Schulter 8 anschlägt.

Wird in der Fig. 6 die Spindel 6 mit der Schulter 15 beispielsweise gegen den Uhrzeigersinn 18 gedreht, dreht die Schulter 15 zunächst berührungslos an der Schulter 8 vorbei, bis die Schulter 15 mit ihrem Anlagebereich 15A an einen Anschlagbereich 9A der Schulter 9 anliegt. Die Schulter 15 nimmt die nicht fixierte Schulter 9 in Drehrichtung mit, bis der Anschlagbereich 9B der Schulter 9 am Anschlagbereich 8B der fixierten Schulter anschlägt.

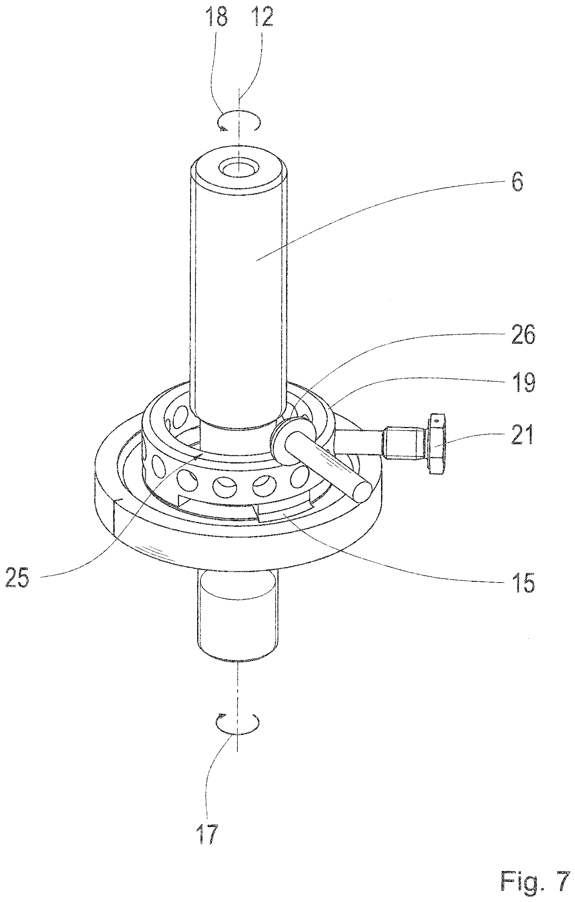

Fig. 7 zeigt beispielhaft wie der Anschlagring 19 mittels eines Kegelradgetriebes verstellt werden kann. Hierfür weist der Anschlagring 19 an einer oberen Seite eine Verzahnung 25 auf und wirkt sozusagen wie ein Tellerrad. Zur Einstellung des Stellbereiches wird ein erstes als Kegelritzel ausgebildetes Bediengerät 26 durch eine Bohrung 14 im Gehäuse geführt und auf die Verzahnung 25 gesetzt und fixiert, so dass das Ritzel 26 mit der Verzahnung 25 des Anschlagrings 19 in Eingriff ist. Nun wird der Sicherungsbolzen 21 des Anschlagrings 19 entfernt und durch Drehung des Ritzels 26 der Anschlagring 19 in eine von beiden Richtungen 17, 18 gedreht. Das Ritzel 26 ist elektromotorisch angetrieben. Es ist aber auch denkbar es manuell zu verstellen. Ist der Stellbereich eingestellt, wird der Anschlagring 19 mittels des Sicherungsbolzens 21 fixiert und das Bediengerät 26 entfernt. Der in Fig. 7 dargestellte Achswinkel zwischen dem Ritzel 26 und dem Anschlagring 19 beträgt 90°. Es sind aber auch andere Achswinkel denkbar, insbesondere Achswinkel zwischen 0° und 135°.

### Bezugszeichen

- 1: Steuerstange
- 2: Aktor
- 3: Planetengetriebe
- 4: Elektromotor
- 5: Spindelmutter
- 6: Spindel
- 7: Zahnrad-/Stirnradstufe
- 8: erstes Anschlagelement, Gewindebolzen, Nocken, Schulter
- 8 A, B: erster und zweiter Anschlagbereich des ersten Anschlagelements
- 9: zweites Anschlagelement, Gewindebolzen, Nocken, Schulter
- 9 A, B: Anschlagbereiche des zweiten Anschlagelements
- 10: Längsachse des Gewindebolzens 8
- 11: Längsachse des Gewindebolzens 9
- 12: Längsachse der Steuerstange
- 13: Steuerstangengehäuse
- 14: Gehäusebohrung
- 15: Anlagebereichselement, Nocken, Schulter
- 15 A, B: erster und zweiter Anlagebereich des Anlagebereichselements
- 16: erstes Trägerelement, Zahnrad
- 17: Drehrichtung Uhrzeigersinn
- 18: Drehrichtung Gegenuhrzeigersinn
- 19: zweites Trägerelement, erster Anschlagring
- 20: Bohrungen Anschlagring 19
- 21: Fixiermittel für Anschlagring 19, Sicherungsbolzen
- 22: drittes Trägerelement zweiter Anschlagring
- 23 A, B: Fixiermittel, Sicherungsbolzen
- 24: obere Seite
- 25: Verzahnung
- 26: Bediengerät, Kegelritzel

## Patentansprüche

1. Steuerstange (1) zum Verstellen von einem Rotorblatt eines Hubschraubers, wobei die Steuerstange (1) in Längsrichtung verstellbar ist, umfassend:
- zumindest ein Anlagebereichselement (15), das um die Längsachse der Steuerstange (1) innerhalb eines Schwenkbereiches verdrehbar angeordnet ist,
- zumindest ein Anschlagelement (8, 9), das ausgebildet ist, die Verstellbarkeit der Steuerstange (1) in Längsrichtung auf einen vorgebbaren Stellbereich in Zusammenwirken mit dem zumindest einen Anlagebereichselement (15) zu begrenzen, wobei die Verstellbarkeit dadurch begrenzt wird, dass das zumindest eine Anlagebereichselement (15) an dem zumindest einen Anschlagelement (8, 9) in Umfangsrichtung der Steuerstange (1) zum Anliegen kommt,
**dadurch gekennzeichnet, dass** das zumindest eine Anschlagelement (8, 9) in Umfangsrichtung der Steuerstange (1) zur Veränderung des vorgebbaren Stellbereiches versetzbar ist, derart, dass ein größerer oder ein kleinerer Schwenkbereich verwirklicht werden kann.

2. Steuerstange (1) nach Anspruch 1, **dadurch gekennzeichnet, dass** die Steuerstange (1) ein koaxial zu ihr und drehbar um Ihre Längsachse (12) angeordnetes erstes Trägerelement (16) mit zumindest einem sich in Längsrichtung der Steuerstange (1) erstreckenden und in Umfangsrichtung unterbrochenen ersten Vorsprung aufweist, wobei dieser Vorsprung das Anlagebereichselement (15) bildet, wobei ein erster Anlagebereich (15A) an einem ersten Ende und ein zweiter Anlagebereich (15B) an einem dem ersten Ende im Wesentlichen gegenüberliegenden zweiten Ende des ersten Vorsprungs angeordnet sind.

3. Steuerstange (1) nach einem der Ansprüche 1 bis 2, **dadurch gekennzeichnet, dass** das zumindest eine Anschlagelement (8, 9) ein Gewindebolzen ist.

4. Steuerstange (1) nach einem der Ansprüche 1 bis 2, **dadurch gekennzeichnet, dass** das zumindest eine Anschlagelement (8, 9) an zumindest einem koaxial zur Steuerstange (1) angeordneten zweiten Trägerelement (19) angeordnet ist, wobei das zumindest eine Anschlagelement (8, 9) mittels eines sich in Längsrichtung der Steuerstange (1) erstreckenden zweiten Vorsprungs gebildet wird, wobei das zumindest zweite Trägerelement (19) mit einem Fixierungsmittel (21) hinsichtlich des um die Längsachse (12) verdrehbaren Anlagebereichselements (15) fixierbar ist.

5. Steuerstange (1) nach Anspruch 4, **dadurch gekennzeichnet, dass** die Steuerstange (1) ein drittes Trägerelement (22) mit einem um die Längsachse (12) der Steuerstange (1) verdrehbaren zweiten Anschlagelement (8, 9) umfasst, wobei das dritte Trägerelement (22) koaxial zum zweiten Trägerelement (19) angeordnet ist, wobei das zweite Trägerelement (19) und das dritte Trägerelement (22) mit einem Fixierungsmittel hinsichtlich des um die Längsachse (12) verdrehbaren Anlagebereichselements (15) fixierbar sind.

6. Steuerstange (1) nach Anspruch 4, **dadurch gekennzeichnet, dass** die Steuerstange (1) ein drittes Trägerelement (22) mit einem um die Längsachse (12) der Steuerstange (1) verdrehbaren zweiten Anschlagelement (8, 9) umfasst, wobei das dritte Trägerelement (22) koaxial zum zweiten Trägerelement (19) angeordnet ist, wobei das Anlagebereichselement (15) radial zum ersten Anschlagelement (8, 9) beabstandet ist.

7. Steuerstange (1) nach einem der vorhergehenden Ansprüche, **dadurch gekennzeichnet, dass** die Steuerstange (1) in Längsrichtung elektrisch mittels eines Aktors (2) verstellbar ist.

8. Steuerstange (1) nach Anspruch 7, **dadurch gekennzeichnet, dass** der Aktor (2) zur Verstellung der Steuerstange (1) einen Spindeltrieb umfasst, wobei eine Spindel (6) des Spindeltriebs über eine Zahnradstufe (7) von einem über einen Elektromotor (4) angetriebenen Planetengetriebe (3) antreibbar ist, wobei die Spindel (6) zur Verstellung der Steuerstange (1) eine Spindelmutter (5) axial bewegt.

9. Steuerstange (1) nach Anspruch 8, **dadurch gekennzeichnet, dass** das zumindest eine Anlagebereichselement (15) drehfest mit einem Zahnrad (16) der Zahnradstufe (7) verbunden ist.

10. Steuerstange (1) nach Anspruch 8 oder 9, **dadurch gekennzeichnet, dass** das zumindest eine Anlagebereichselement (15) integral mit einem Zahnrad (16) der Zahnradstufe (7) ausgebildet ist.

11. Steuerstange (1) nach einem der Ansprüche 7 bis 10, **dadurch gekennzeichnet, dass** der Aktor (2) in Abhängigkeit von Sollvorgaben und von Istpositionen sowie von Sensorsignalen ansteuerbar ist.

## Claims

1. Control rod (1) for adjusting a rotor blade of a helicopter, wherein the control rod (1) can be adjusted in the longitudinal direction, said control rod comprising:
- at least one bearing-region element (15), which is arranged so as to be able to rotate about the longitudinal axis of the control rod (1) within a pivoting range,
- at least one stop element (8, 9), which is designed to delimit the adjustability of the control rod (1) in the longitudinal direction to a predefinable adjustment range in interaction with the at least one bearing-region element (15), wherein the adjustability is delimited in that the at least one bearing-region element (15) comes to bear against the at least one stop element (8, 9) in the circumferential direction of the control rod (1), **characterized in that** the at least one stop element (8, 9) can be displaced in the circumferential direction of the control rod (1) in order to change the predefinable adjustment range, in such a way that a larger or a smaller pivoting range can be implemented.

2. Control rod (1) according to Claim 1, **characterized in that** the control rod (1) has a first carrier element (16) which is arranged coaxially with respect to said control rod and so as to be able to rotate about the longitudinal axis (12) of said control rod and has at least one first projection which extends in the longitudinal direction of the control rod (1) and is interrupted in the circumferential direction, wherein this projection forms the bearing-region element (15), wherein a first bearing region (15A) is arranged at a first end, and a second bearing region (15B) is arranged at a second end, situated substantially opposite the first end, of the first projection.

3. Control rod (1) according to either of Claims 1 to 2, **characterized in that** the at least one stop element (8, 9) is a threaded bolt.

4. Control rod (1) according to either of Claims 1 to 2, **characterized in that** the at least one stop element (8, 9) is arranged on at least one second carrier element (19) arranged coaxially with respect to the control rod (1), wherein the at least one stop element (8, 9) is formed by means of a second projection extending in the longitudinal direction of the control rod (1), wherein the at least second carrier element (19) can be fixed with regard to the bearing region element (15), which can be rotated about the longitudinal axis (12), by way of a fixing means (21).

5. Control rod (1) according to Claim 4, **characterized in that** the control rod comprises a third carrier element (22) with a second stop element (8, 9) which can be rotated about the longitudinal axis (12) of the control rod (1), wherein the third carrier element (22) is arranged coaxially with respect to the second carrier element (19), wherein the second carrier element (19) and the third carrier element (22) can be fixed with regard to the bearing-region element (15), which can be rotated about the longitudinal axis (12), by way of a fixing means.

6. Control rod (1) according to Claim 4, **characterized in that** the control rod (1) comprises a third carrier element (22) with a second stop element (8, 9) which can be rotated about the longitudinal axis (12) of the control rod (1), wherein the third carrier element (22) is arranged coaxially with respect to the second carrier element (19), wherein the bearing-region element (15) is radially spaced apart from the first stop element (8, 9).

7. Control rod (1) according to one of the preceding claims, **characterized in that** the control rod (1) can be adjusted in the longitudinal direction electrically by means of an actuator (2).

8. Control rod (1) according to Claim 7, **characterized in that** the actuator (2) comprises a spindle drive for the purpose of adjusting the control rod (1), wherein a spindle (6) of the spindle drive can be driven by a toothed gear stage (7) of a planetary transmission (3) which is driven by an electric motor (4), wherein the spindle (6) axially moves a spindle nut (5) in order to adjust the control rod (1).

9. Control rod (1) according to Claim 8, **characterized in that** the at least one bearing-region element (15) is connected to a toothed gear (16) of the toothed gear stage (7) for conjoint rotation therewith.

10. Control rod (1) according to Claim 8 or 9, **characterized in that** the at least one bearing-region element (15) is formed integrally with a toothed gear (16) of the toothed gear stage (7).

11. Control rod (1) according to one of Claims 7 to 10, **characterized in that** the actuator (2) can be controlled in dependence on desired specifications and on actual positions and on sensor signals.

## Revendications

1. Barre de commande (1) destinée au réglage d'une pale de rotor d'hélicoptère, la barre de commande (1) étant réglable dans la direction longitudinale, ladite barre comprenant:
- au moins un élément de zone d'appui (15) qui est disposé de manière à pouvoir tourner sur l'axe longitudinal de la barre de commande (1) à l'intérieur d'une plage de pivotement,
- au moins un élément de butée (8, 9) qui est conçu pour limiter la capacité de réglage de la barre de commande (1) dans la direction longitudinale à une plage de réglage pouvant être prédéfinie en coopération avec l'au moins un élément de zone d'appui (15), la capacité de réglage étant limitée par le fait que l'au moins un élément de zone d'appui (15) vient en appui contre l'au moins un élément de butée (8, 9) dans la direction circonférentielle de la barre de commande (1),
**caractérisée en ce que** l'au moins un élément de butée (8, 9) peut être décalé dans la direction circonférentielle de la barre de commande (1) pour la modification de la plage de réglage pouvant être prédéfinie, de telle sorte qu'une plage de pivotement plus grande ou plus petite puisse être réalisée.

2. Barre de commande (1) selon la revendication 1, **caractérisée en ce que** la barre de commande (1) comporte un premier élément porteur (16) qui est disposé coaxialement à celle-ci et de manière à pouvoir tourner sur son axe longitudinal (12) et qui comprend au moins une première saillie s'étendant dans la direction longitudinale de la barre de commande (1) et interrompue dans la direction circonférentielle, cette saillie formant l'élément de zone d'appui (15), une première zone d'appui (15A) étant disposée à une première extrémité de la première saillie et une deuxième zone d'appui (15B) étant disposée à une deuxième extrémité, sensiblement opposée à la première extrémité, de la première saillie.

3. Barre de commande (1) selon l'une des revendications 1 à 2, **caractérisée en ce que** l'au moins un élément de butée (8, 9) est un boulon fileté.

4. Barre de commande (1) selon l'une des revendications 1 à 2, **caractérisée en ce que** l'au moins un élément de butée (8, 9) est disposé sur au moins un deuxième élément porteur (19) disposé coaxialement à la barre de commande (1), l'au moins un élément de butée (8, 9) étant formé au moyen d'une deuxième saillie s'étendant dans la direction longitudinale de la barre de commande (1), l'au moins deuxième élément porteur (19) pouvant être fixé à l'aide d'un moyen de fixation (21) en ce qui concerne l'élément de zone d'appui (15) pouvant tourner sur l'axe longitudinal (12).

5. Barre de commande (1) selon la revendication 4, **caractérisée en ce que** la barre de commande (1) comporte un troisième élément porteur (22) comprenant un deuxième élément de butée (8, 9) pouvant tourner sur l'axe longitudinal (12) de la barre de commande (1), le troisième élément porteur (22) étant disposé coaxialement au deuxième élément porteur (19), le deuxième élément porteur (19) et le troisième élément porteur (22) pouvant être fixés à l'aide d'un moyen de fixation en ce qui concerne l'élément de zone d'appui (15) pouvant tourner sur l'axe longitudinal (12).

6. Barre de commande (1) selon la revendication 4, **caractérisée en ce que** la barre de commande (1) comporte un troisième élément porteur (22) comprenant un deuxième élément de butée (8, 9) pouvant tourner sur l'axe longitudinal (12) de la barre de commande (1), le troisième élément porteur (22) étant disposé coaxialement au deuxième élément porteur (19), l'élément de zone d'appui (15) étant espacé radialement du premier élément de butée (8, 9).

7. Barre de commande (1) selon l'une des revendications précédentes, **caractérisée en ce que** la barre de commande (1) est réglable électriquement au moyen d'un actionneur (2) dans la direction longitudinale.

8. Barre de commande (1) selon la revendication 7, **caractérisée en ce que** l'actionneur (2) servant au réglage de la barre de commande (1) comprend un entraînement de broche, une broche (6) de l'entraînement de broche pouvant être entraînée par un engrenage planétaire (3), entraîné par un moteur électrique (4), par le biais d'un étage de roues dentées (7), la broche (6) déplaçant axialement un écrou de broche (5) afin de régler la barre de commande (1).

9. Barre de commande (1) selon la revendication 8, **caractérisée en ce que** l'au moins un élément de zone d'appui (15) est relié solidairement en rotation à une roue dentée (16) de l'étage de roues dentées (7).

10. Barre de commande (1) selon la revendication 8 ou 9, **caractérisée en ce que** l'au moins un élément de zone d'appui (15) est formé d'un seul tenant avec une roue dentée (16) de l'étage de roues dentées (7).

11. Barre de commande (1) selon l'une des revendications 7 à 10, **caractérisée en ce que** l'actionneur (2) peut être commandé en fonction de consignes et de positions réelles ainsi que de signaux de capteurs.
